(19)
Europäisches
Patentamt
European
Patent Office
Office européen
des brevets

(11) **EP 4 228 175 B1**

(12) **EUROPEAN PATENT SPECIFICATION**

(45) Date of publication and mention of the grant of the patent:
**26.11.2025 Bulletin 2025/48**

(21) Application number: **22155873.7**

(22) Date of filing: **09.02.2022**

(51) International Patent Classification (IPC):
***H04B 10/70*** *(2013.01)*

(52) Cooperative Patent Classification (CPC):
**H04B 10/70**

(54) **SYSTEM AND METHOD FOR POLARIZATION COMPENSATION**

VORRICHTUNG UND VERFAHREN ZUR POLARISATIONSKOMPENSATION

SYSTÈME ET PROCÉDÉ DE COMPENSATION DE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2023 Bulletin 2023/33**

(73) Proprietor: **Fraunhofer-Gesellschaft zur Förderung der angewandten Forschung e.V.**
**80686 München (DE)**

(72) Inventors:
- **STEINLECHNER, Fabian**
  **07745 Jena (DE)**
- **MARQUES MUNIZ, André Luiz**
  **07745 Jena (DE)**
- **CHANDRASHEKARA, Uday**
  **07745 Jena (DE)**
- **KRZIC, Andrej**
  **07745 Jena (DE)**

(74) Representative: **Louis Pöhlau Lohrentz Patentanwälte**
**Merianstrasse 26**
**90409 Nürnberg (DE)**

(56) References cited:
**EP-A1- 3 771 117**
**US-A1- 2009 268 276**
**US-A1- 2010 208 334**
**US-A1- 2015 055 961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 228 175 B1

## Description

The present invention provides a system for polarization compensation according to the preamble of claim 1 and claim 2 and a method for polarization compensation according to the preamble of claim 9.

For quantum communication, quantum information and quantum cryptography polarized photons or polarization-entangled photon pairs are transmitted via a quantum channel from a source to one or more receivers. The transmission can take place in a guided quantum channel, for example in a fiber. The advantage of such a guided quantum channel is the easy connection of the source with the receiver.

When a polarized photon or the photons of a polarization-entangled photon pair is sent via the guided quantum channel an unknown unitary transformation of the polarization (polarization rotation) is introduced by the quantum channel. To compensate this unitary transformation in known systems a polarization compensation means is arranged in each quantum channel. Commonly, as polarization compensation means three waveplates, or a fiber-squeezer, or fiber-paddles, or liquid crystals are used. To compensate the unknown unitary transformation, in known systems photons with known polarization in at least two non-orthogonal bases are sent from the source to one receiver and the polarization compensation means is aligned via a trial-and-error process in order to compensate the unknown unitary transformation in this specific quantum channel. The disadvantage of such systems and compensation means is the long and imprecise alignment process, since the two non-orthogonal bases must be approached iteratively step by step in these methods and systems. US2010/208334A1, US2015/055961 A1 and EP3771117A1 all disclose polarization compensation for quantum transmission.

It is an object of the present invention to provide an improved and more precise system and an improved, more precise, and a faster method for the polarization compensation.

According to the present invention, a system for polarization compensation is provided according to claim 1 and claim 2.

According to the present invention, a method for polarization compensation is provided according to claim 9.

The advantage of the inventive system and the inventive method is that the two non-orthogonal bases are adjusted independently by the inventive polarization compensation means and by inventive adjustment steps due to the use of five wave-plates with three rotatable wave-plates. That means, the arbitrary polarization rotation introduced by the first and/or the second quantum channel is compensated by the inventive polarization compensation means and by the inventive adjustment steps.

In a preferred embodiment of the system and/or the method, three wave-plates are rotatable and two wave-plates are fixed. Fixed wave-plates means here, that these wave-plates are not rotated for the polarization compensation and are aligned in the system at a specific angle.

In a preferred embodiment, for the polarization compensation only in the first quantum channel polarized photons are used. In a preferred embodiment, for the polarization compensation in the first and the second quantum channel polarization-entangled photon pairs are used. The inventive polarization compensation means and the inventive method can be used for the polarization compensation with only one polarization compensation means for one quantum channel between the source and the receiver by the use of polarized photons, and also can be used for the polarization compensation with only one polarization compensation means for two quantum channel, a first quantum channel between the source and the first receiver and a second quantum channel between the source and the second receiver, by the use of polarization-entangled photon pairs. By the use of polarized photons, the two non-orthogonal bases are aligned accordingly to two non-orthogonal bases of the polarized photons, whereby the advantage of this embodiment is the easy generation of polarized photons in two non-orthogonal bases. In the case that the source is connected via multiple quantum channels with multiple receivers and polarized photons are used for the polarization compensation, one polarization compensation means has to be arranged in each quantum channel. The advantage of the use of polarization-entangled photon pairs is that the two non-orthogonal bases of the two receivers can be aligned to each other, without the knowledge of the two non-orthogonal bases in the space. For that only one polarization compensation means is necessary for two quantum channels. This can be realized by the use of the polarization-entanglement of the photon pairs.

In a preferred embodiment, the adjustments in the steps i) and ii) are performed in order to obtain a polarization compensation in the first non-orthogonal base and the adjustment in step iii) is performed in order to obtain an independent polarization compensation in the second non-orthogonal base. Independent means here, that in step iii) the polarization compensation for the first non-orthogonal base is not influenced by the polarization compensation for the second non-orthogonal base. In a preferred embodiment, the first rotatable wave-plate and second rotatable wave-plate are arranged in order to enable a polarization compensation in the first non-orthogonal base, and the third rotatable wave-plate is arranged in order to enable a polarization compensation in the second non-orthogonal base.

**In** a preferred embodiment, the two fixed wave-plates, preferably by the arrangement and the orientation, enable a decoupling of the polarization compensation of the first non-orthogonal base by the first and second rotatable wave-plate and the second non-orthogonal base by the third rotatable wave plate. By this embodiment the adjustment of the polarization compensation in two non-orthogonal bases are decoupled, whereby the first two rotatable wave plates are used in order to realize a polarization compensation of the first non-orthogonal base and the third rotatable wave plate is used in order to realize an independent polarization compensation of the second non-orthogonal base. Arrangement means here, the order where the fixed wave-plates are arranged, and orientation means here, the angle of the optical axis of the fixed wave-plates.

In a preferred embodiment by the use of polarized photons, in step i) and ii) the source generates polarized photons in a state in the first non-orthogonal base, and in step iii) the source generates polarized photons in a state in the second non-orthogonal base. In a preferred embodiment by the use of polarized photons, the first, second, and third parameter are determined by the detected polarized photons in the detection means. In a preferred embodiment by the use of polarized photons, the non-orthogonal bases measured in the detection means are the non-orthogonal bases of the polarized photons generated in the source.

In a preferred embodiment by the use of polarization-entangled photon pairs, in step i), ii) and iii) the source generates polarization-entangled photon pairs. In a preferred embodiment by the use of polarization-entangled photon pairs, the first, second and third parameter are determined by the detected coincidences of the polarization-entangled photon pairs in both detection means.

A wave-plate shifts the phase between two perpendicular polarization components of the light. In a preferred embodiment, the wave-plate is a birefringent crystal with a thickness according to the wavelength of the polarized photons or the polarization-entangled photon pairs.

In a preferred embodiment, the five wave-plates of the polarization compensation means are half-wave-plates and/or quarter-wave-plates.

In a preferred embodiment, the orientation of the fast axis of the wave plates for 0° is parallel to one detection state of one non-orthogonal base in the detection means, preferably parallel to the horizontal linear polarization in the detection means. Fixed wave-plates means here, that the fast axis of the fixed wave-plates is aligned in a fixed position to the detection means, that means the fixed wave-plates are not rotated for the polarization compensation.

In a preferred embodiment, the two fixed wave plates are quarter-wave-plates. In a preferred embodiment, the two fixed wave plates are arranged at 0° and 90°, or 45° and 135°, or in a $n * 90°$ variation of this, with $n = 1, 2, 3, ....$

In a preferred embodiment, the first rotatable wave-plate is a quarter-wave-plate or a half-wave-plate, and the second rotatable wave-plate is a half-wave-plate, and the third rotatable wave-plate is a half-wave-plate.

In a preferred embodiment, the first fixed wave-plate is arranged between the first rotatable and the second rotatable wave plate and the second fixed wave-plate is arranged between the second rotatable and the third rotatable wave-plate, or the first fixed wave-plate is arranged between the second rotatable and the third rotatable wave plate and the second fixed wave-plate is arranged behind the third rotatable wave-plate. The order means here that the photons travel first through the first rotatable wave-plate and so on.

In a preferred embodiment, the two non-orthogonal bases are mutually unbiased bases, for example two bases out of the H/V base, or D/A base, or R/L base. With H denotes linear horizontal polarization, V denotes linear vertical polarization, D denotes linear diagonal (45%) polarization, A denotes linear antidiagonal (-45%) polarization, R denotes circular righthand polarization, L denotes circular lefthand polarization. The advantage of this bases is the use of optical components like polarizing beam splitter in the detection means and the use of the Stokes-parameter as first, second and third parameter.

In a preferred embodiment, the first, second and third parameters are Stokes-parameter, or variations out of the Stokes-parameter. In a preferred embodiment, the first, second and third parameters are the first Stokes-parameter $S_1$, and/or the second Stokes-parameter $S_2$, and/or the third Stokes-parameter $S_3$. In a preferred embodiment, each parameter is a different Stokes-parameter. In a preferred embodiment, the first and second parameter are different Stokes-parameter and the third parameter is equal to the first or the second parameter. Which Stokes-parameter are used depends on the non-orthogonal bases of the generated polarized photons and the non-orthogonal bases measured in the detection means.

The Stokes-parameter are a set of values describing the polarization of a state. In general, the polarization of a state can be described by four values $S_0$, $S_1$, $S_2$, $S_3$. $S_0$ describes the intensity of the state and the values $S_1$, $S_2$, $S_3$ the intensity of the projection of the polarization onto horizontal-vertical, diagonal-antidiagonal, and circular basis, respectively. The Stokes-parameter can be combined into a vector known as Stokes vector, including the space of unpolarized, partially polarized, and fully polarized light, whereby the known Poincaré sphere is the parametrization of the last three Stokes-parameters in spherical coordinates for the fully polarized light.

In a preferred embodiment, the first Stokes-parameter, and/or the second Stokes-parameter, and/or the third Stokes-parameter depend on the single photon detected in one or more of the non-orthogonal bases in the detection means, or depend on the coincidences of the polarization-entangled photon pairs in one or more of the non-orthogonal bases in the two detection means. That means the first, second and third parameter as Stokes-parameter can be calculated out of the detected photons in the detection means.

In a preferred embodiment, the Stokes-parameter are calculated by $S_1 = \frac{N_H - N_V}{N_H + N_V}$ , and $S_2 = \frac{N_D - N_A}{N_D + N_A}$ , and $S_3 = \frac{N_R - N_L}{N_R + N_L}$ . With $N_x$ is the number of detected photons in a time interval, and H denotes the photon number with linear horizontal polarization, V denotes the photon number with linear vertical polarization, D denotes the photon number with linear diagonal (45%) polarization, A denotes the photon number with linear antidiagonal (-45%) polarization, R denotes the photon number with circular righthand polarization, L denotes the photon number with circular lefthand polarization.

In a preferred embodiment, two Stokes-parameter are calculated by the photon detection in the detection means. In order to enable the calculation of two Stokes-parameter, the detection means is capable to detect the polarization of the photons in two non-orthogonal polarization bases. In a preferred embodiment, the last Stokes-parameter is calculated out of the two measured Stokes-parameter by $S_1^2 + S_2^2 + S_3^2 = 1$. In a preferred embodiment, when the last Stokes-parameter is calculated out of two Stokes-parameter this parameter in the step i), ii), and/or iii) is the last Stokes-parameter squared.

In a preferred embodiment, three Stokes-parameter are calculated by the photon detection in the detection means. In order to enable the calculation of three Stokes-parameter, the detection means is capable to detect the polarization of the photons in three non-orthogonal polarization bases.

In a preferred embodiment, the steps i) and ii) are performed until the visibility in the first non-orthogonal base is $vis_1 \geq 95\%$, preferably $vis_1 \geq 98\%$, more preferably $vis_1 \geq 99\%$. The visibility can be calculated out of the first, second, or third parameter corresponding to the first non-orthogonal base by $vis_1 = |S_1|\ or\ |S_2|\ or\ |S_3|$ depending on the chosen first non-orthogonal base.

In a preferred embodiment, the adjustment in step i), ii) and iii) is performed by a rotation of the wave-plate in an arbitrary direction and a comparison of the parameter with the value before the rotation. When the parameter changed in the desired direction (maximization or minimization) the rotation is continued in this direction, otherwise the rotation direction is changed or the maximum or minimum is already reached. The rotation of the wave-plates is performed in steps smaller than 10° rotation of the wave plate, preferably smaller than 5°, more preferably smaller than 2°.

In a preferred embodiment, the first, second and third parameters are coincidences of the polarization-entangled photon pairs, and/or the quantum bit error rate, and/or the visibility of the polarization-entangled photon pairs, or variation of this parameter.

In a preferred embodiment, the detection means comprises optical components in order to measure the polarization of the photons in two or three non-orthogonal bases. In a preferred embodiment, the detection means comprises optical components in order to measure two orthogonal states in each of the two or three non-orthogonal bases.

In a preferred embodiment, the detectors communicate the detection of a photon to a computer in order to calculate the first, second, and/or third parameter, or communicate the detection of a photon to a logic in order to determine the coincidences of the polarization-entangled photon pairs in order to calculate the first, second, and/or third parameter.

In a preferred embodiment, the optical components are one or more beam splitter, one or more polarizing beam splitter, and/or one or more wave-plates, and/or polarizer, and/or polarization rotation elements, and/or single photon detectors.

In a preferred embodiment, the source for polarized photons is a laser, preferably with or without a wave-plate, and/or polarizer, and/or optical elements in order to generate the polarized photons in at least two non-orthogonal bases.

In a preferred embodiment, the source for polarization-entangled photon pairs comprises a non-linear element and optical components in order to generate polarization-entangled photon pairs, preferably the source is a Sagnac-source, or a BBO-source, or an entangled photon source based on four-wave-mixing.

In a preferred embodiment, the polarization compensation means is arranged in a free-space section of the quantum channel. In this embodiment, the quantum channel comprises at least one fiber section and one free-space section. The free-space section can be arranged behind the source in front of the fiber-section, or between two fiber-sections, or in front of the detection means behind the fiber section. The advantage of this embodiment is the cost-efficiencies of the used wave-plate, the rotatability of the rotational wave-plates, and the easy alignment of the fixed wave plate.

The above and other aspects, features and advantages of the present invention will become more apparent from the following detailed description when taken in conjunction with the accompanying drawings.

Brief Description of the Drawings:

- Fig. 1: schematic diagram of an example of the inventive system with a first optical channel;
- Fig. 2: schematic diagram of an example of the inventive system with a first and a second optical channel;
- Fig. 3: schematic diagram of an example of a polarization compensation means and a detection means;

Fig. 4: schematic diagram of the rotation of the polarization of polarized photons in the first base by step i) and ii);

Fig. 5: schematic diagram of the rotation of the polarization of polarized photons in the second base by step iii);

Fig. 6: first example of an inventive polarization compensation means;

Fig. 7: second example of an inventive polarization compensation means.

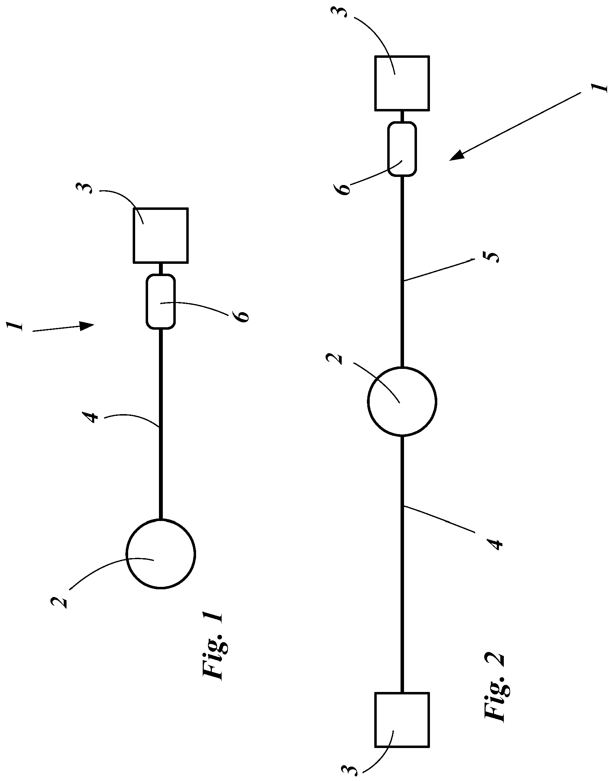

Fig. 1 shows a first example of the inventive system 1 for polarization compensation with a source 2 generating polarized photons, a detection means 3, a first quantum channel 4 connecting the source 2 and the detection means 3, and a polarization compensation means 6 arranged in the first quantum channel 4.

In the example of Fig. 1 the source 2 generates polarized photons in two non-orthogonal bases, whereby for the adjustment in the first non-orthogonal base the source only generates polarized photons in the first base, and for the adjustment in the second non-orthogonal base the source only generates polarized photons in the second base.

The polarized photons are guided via the quantum channel 4 to the detection means 3. Due to the quantum channel 4 an arbitrary polarization rotation is introduced. In order to compensate this arbitrary polarization rotation, the polarization compensation means 6 is arranged in the first quantum channel 4 and is adjusted accordingly.

Fig. 2 shows a second example of the inventive system 1 for polarization compensation with the source 2 generating polarization-entangled photon pairs, two detection means 3, the first quantum channel 4 and a second quantum channel 5 connecting the source 2 and both detection means 3, and a polarization compensation means 6 arranged in the second quantum channel 4 in this example.

In the example of Fig. 2 the source 2 generates polarization-entangled photon pairs, with a first and a second photon of each pair. The first photon of each pair is guided via the first quantum channel 4 to the detection means 3, and the second photon of each pair is guided via the second quantum channel 5 to the detection means 3. In order to compensate the arbitrary polarization rotation in both quantum channels 4 and 5, the polarization compensation means 6 is arranged in this example in the second quantum channel 5.

In the example of Fig. 2 there are no reference photons with reference non-orthogonal bases as in the example of Fig. 1, but the bases of both receivers are arranged to each other by the use of polarization-entangled photon pairs. The arrangement of the bases of the two detection means to the source is unknown and not necessary by the use of polarization-entangled photon pairs.

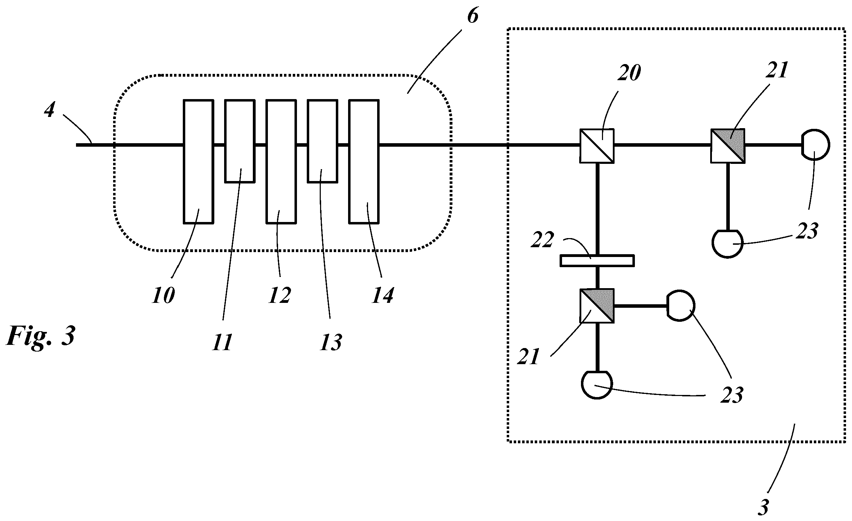

Fig. 3 shows a first example of the inventive polarization compensation means 6 and the detection means 3 in detail. The polarization compensation means 6 comprises five wave-plates, whereby a first wave-plate 10, a third wave plate 12, and a fifth wave-plate 14 are rotatable, indicated by the larger square. A second wave-plate 11 and a fourth wave-plate 13 are arranged in a fixed orientation.

The detection means 3 in Fig. 3 is capable to measure the polarization in two non-orthogonal bases and in two orthogonal states in each base. For that the detection means 3 comprises a beam splitter 20 at which the photons are randomly (50/50) reflected or transmitted, whereby the transmitted photons are measured in the first non-orthogonal base (H/V) by a polarizing beam splitter 21 and two detectors 23 behind the output of the polarizing beam splitter 21, and the reflected photons are rotated in this example linearly by 45° in order to be measured in the second non-orthogonal base (D/A) by a second beam splitter 21 and two detectors 23 behind the output of the second beam splitter 21.

The detectors 23 are single photon detectors and can communicate the detection of a photon to a computer (not shown in Fig. 3) in order to calculate the first, second, and/or third parameter, or are connected to a logic (not shown in Fig. 3) in order to determine the coincidences of the polarization-entangled photon pairs in order to calculate the first, second, and/or third parameter.

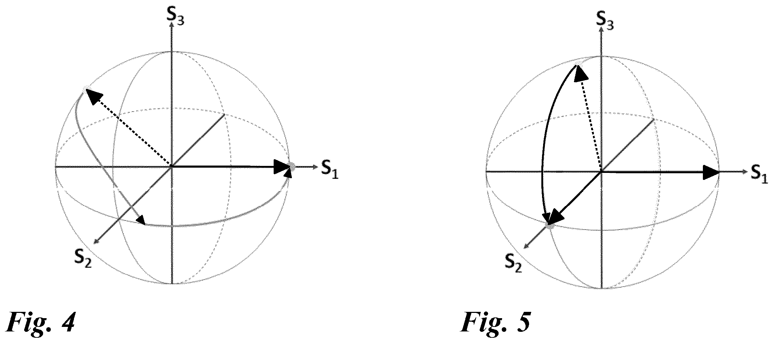

In Fig. 4 and Fig. 5 the polarization rotation in the first non-orthogonal base by the steps i) and ii) and the independent polarization rotation in the third step iii) by the third rotatable wave-plate in the second non-orthogonal base is explained. The point on the Poincaré sphere, indicated by the dashed arrow, is the polarization measured in the detection means 3 when photons with a first state in the first non-orthogonal base are sent through the first quantum channel 4 and detected in the detection means 3. The axis of the Poincaré sphere indicate the first Stokes-parameter $S_1$, the second Stokes-parameter $S_2$, and the third Stokes-parameter $S_3$.

In order to realize the polarization compensation, in this example first horizontal polarized photons are generated for the alignment steps i) and ii) with the first and the second rotatable wave-plate and then diagonal polarized photons are generated for the alignment step iii) with the third rotatable wave-plate. The polarization of the photons is first rotated by the first rotatable wave-plate in the equatorial plane (a rotatable quarter-wave-pate) and then with the second rotatable wave-plate (a rotatable half-wave-plate) to the maximum of the horizontal polarization as shown in Fig. 4 by the arrow on the axis $S_1$. Due to that alignment steps the horizontal polarized photons from the source 2 will be detected as horizontal polarized photons in the detection means 3.

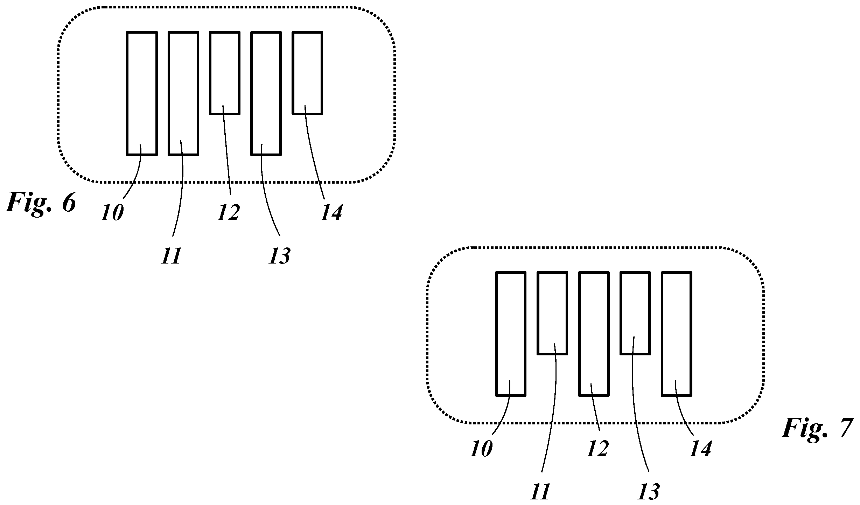

In order to obtain a complete polarization compensation for each polarization, the second non-orthogonal base has to be adjusted as well, without destroying the polarization compensation in the first non-orthogonal base. This is realized by the alignment step iii) by the third rotatable wave-plate where diagonal polarized photons are generated in the source 2 and rotated by the third rotatable wave-plate to a maximum of the second Stokes-parameter $S_2$. The independent polarization rotation of the diagonal polarized photons is realized by the rotation around the first Stokes-parameter $S_1$. A few examples of the wave-plate arrangements with three rotatable wave-plates for an independent polarization rotation for the second non-orthogonal base are shown in the Fig. 6 and Fig. 7.

In a first configuration of Fig. 6 the first non-orthogonal base of the detection means is the H/V base and the second non-orthogonal base is the D/A base. In this example the five wave-plates are arranged in the following order starting with the wave-plate closest to the source: the first wave-plate 10 is a rotatable quarter-wave-plate, the second wave-plate 11 is a rotatable half-wave-plate, the third wave-plate 12 is a fixed quarter-wave-plate at 45°, the fourth wave-plate 13 is a rotatable half-wave-plate, and the fifth wave-plate 14 is a fixed quarter-wave-plate at 135°.

The alignment steps in this first configuration of Fig. 6 are performed as followed: step i) minimization of the first parameter (here the Stokes-parameter $S_3^2$ ) by the first wave-plate 10 (rotatable quarter-wave-plate) and detection of the photons in the H/V and D/A base;

step ii) maximization of the second parameter (here the Stokes-parameter $S_1$) by the second wave-plate 11 (rotatable half-wave-plate) and detection of the photons in the H/V base,
whereby in step i) and ii) the source generates horizontal polarized photons, and step iii) maximization of the third parameter (here the Stokes-parameter $S_2$) by the fourth wave-plate 13 (rotatable half-wave-plate) and detection of the photons in the D/A base, whereby in step iii) the source generates diagonal polarized photons.

In the second configuration of Fig. 6 the first non-orthogonal base of the detection means is the D/A base and the second non-orthogonal base is the H/V base. In this example the five wave-plates are arranged in the following order starting with the wave-plate closest to the source: the first wave-plate 10 is a rotatable quarter-wave-plate, the second wave-plate 11 is a rotatable half-wave-plate, the third wave-plate 12 is a fixed quarter-wave-plate at 0°, the fourth wave-plate 13 is a rotatable half-wave-plate, and the fifth wave-plate 14 is a fixed quarter-wave-plate at 90°.

The alignment steps in this second configuration of Fig. 6 are performed as followed:

step i) minimization of the first parameter (here the Stokes-parameter $S_3^2$ ) by the first wave-plate 10 (rotatable quarter-wave-plate) and detection of the photons in H/V and D/A base;
step ii) maximization of the second parameter (here the Stokes-parameter $S_2$) by the second wave-plate 11 (rotatable half-wave-plate) and detection of the photons in the D/A base,
whereby in step i) and ii) the source generates diagonal polarized photons, and step iii) maximization of the third parameter (here the Stokes-parameter $S_1$) by the fourth wave-plate 13 (rotatable half-wave-plate) and detection of the photons in the H/V base, whereby in step iii) the source generates horizontal polarized photons.

In the first configuration of Fig. 7 the first non-orthogonal base of the detection means is the R/L base and the second non-orthogonal base is the H/V base. In this example the five wave-plates are arranged in the following order starting with the wave-plate closest to the source: the first wave-plate 10 is a rotatable half-wave-plate, the second wave-plate 11 is a fixed quarter-wave-plate at 0°, the third wave-plate 12 is a rotatable half-wave-plate, the fourth wave-plate 13 is a fixed quarter-wave-plate at 90°, and the fifth wave-plate 14 is a rotatable half-wave-plate.

The alignment steps in the first configuration of Fig. 7 are performed as followed: step i) maximization of the first parameter (here the Stokes-parameter $S_1$) by the first wave-plate 10 (rotatable half-wave-plate) and detection of the photons in H/V base;

step ii) maximization of the second parameter (here the Stokes-parameter $S_3$) by the third wave-plate 12 (rotatable half-wave-plate) and detection of the photons in the R/L base,
whereby in step i) and ii) the source generates circular righthand polarized photons, and
step iii) maximization of the third parameter (here the Stokes-parameter $S_1$) by the fifth wave-plate 14 (rotatable half-wave-plate) and detection of the photons in the H/V base,
whereby in step iii) the source generates horizontal polarized photons.

In the second configuration of Fig. 7 the first non-orthogonal base of the detection means is the R/L base and the second non-orthogonal base is the D/A base. In this example the five wave-plates are arranged in the following order starting with the wave-plate closest to the source: the first wave-plate 10 is a rotatable half-wave-plate, the second wave-plate 11 is a fixed quarter-wave-plate at 45°, the third wave-plate 12 is a rotatable half-wave-plate, the fourth wave-plate 13 is a fixed quarter-wave-plate at 135°, and the fifth wave-plate 14 is a rotatable half-wave-plate.

The alignment steps in this second configuration of Fig. 7 are performed as followed:

step i) maximization of the first parameter (here the Stokes-parameter $S_2$) by the first wave-plate 10 (rotatable half-wave-plate) and detection of the photons in D/A base;
step ii) maximization of the second parameter (here the Stokes-parameter $S_3$) by the third wave-plate 12 (rotatable half-wave-plate) and detection of the photons in the R/L base,
whereby in step i) and ii) the source generates circular righthand polarized photons, and
step iii) maximization of the third parameter (here the Stokes-parameter $S_2$) by the fifth wave-plate 14 (rotatable half-wave-plate) and detection of the photons in the D/A base,
whereby in step iii) the source generates diagonal polarized photons.

In the configuration of Fig. 6 and 7 the fixed wave plates can be arranged in a n * 90° variation of the described angled, with n = 1, 2, 3, ....

Reference signs:

| | |
|---|---|
| 1 | System for polarization compensation |
| 2 | Source |
| 3 | detection means |
| 4 | first quantum channel |
| 5 | second quantum channel |
| 6 | polarization compensation means |
| 10 | first wave-plate |
| 11 | second wave-plate |
| 12 | third wave-plate |
| 13 | fourth wave-plate |
| 14 | fifth wave-plate |
| 20 | beam splitter |
| 21 | polarizing beam splitter |
| 22 | wave plate in detection means |
| 23 | detector |

## Claims

1. System (1) for quantum communication, quantum information and quantum cryptography, comprising a source (2) configured to generate polarized photons in two polarization states of at least two non-orthogonal polarization bases, and

   a first receiver with a detection means (3), whereby the detection means (3) enables the polarization measurement of the photons in the two polarization states of the at least two non-orthogonal polarization bases, and
   a first quantum channel (4), for guidance of the polarized photons from the source (2) to the first receiver, and
   a polarization compensation means (6) arranged in the first quantum channel (4) for compensating for the polarization transformation in the first quantum channel,
   wherein the polarization compensation means (6) comprises five successive wave-plates.
   whereby three wave-plates are rotatable.

2. System (1) for quantum communication, quantum information and quantum cryptography, comprising a source (2) configured to generate polarization-entangled photon pairs with a first and a second photon for each pair, and

   a first receiver and a second receiver with a detection means (3) each, whereby each detection means (3) enables the polarization measurement of the photons in at least two non-orthogonal polarization bases, and
   a first quantum channel (4), for guidance of the first photon of each polarization-entangled photon pair from the source (2) to the first receiver, and a second quantum channel (5), for guidance of the second photon of each polarization-entangled photon pair from the source (2) to the second receiver, and
   one polarization compensation means (6) arranged in the first quantum channel (4) or in the second quantum channel (5) for compensating for the polarization transformation in the first or the second quantum channel,
   wherein the polarization compensation means (6) comprises five successive wave-plates,
   whereby three wave-plates are rotatable.

3. System (1) according to claim 1 or 2,
   **characterized in that**
   three wave-plates are rotatable and two wave-plates are fixed.

4. System (1) according to one of the claims 1 to 3,
   **characterized in that**
   the five wave-plates of the polarization compensation means (6) are half-wave-plates and/or quarter-wave-plates.

5. System (1) according to one of the claims 1 to 4,
   **characterized in that**
   the two fixed wave plates are quarter-wave-plates, preferably the two fixed wave plates are arranged at 0° and 90°, or 45° and 135°, or in a n * 90° variation of this, with n = 1, 2, 3, ....

6. System (1) according to one of the claims 1 to 5,
   **characterized in that**
   the first rotatable wave-plate is a quarter-wave-plate or a half-wave-plate, and the second rotatable wave-plate is a half-wave-plate, and the third rotatable wave-plate is a half-wave-plate.

**7.** System (1) according to one of the claims 1 to 6, **characterized in that** the first fixed wave-plate is arranged between the first rotatable and the second rotatable wave plate and the second fixed wave-plate is arranged between the second rotatable and the third rotatable wave-plate, or the first fixed wave-plate is arranged between the second rotatable and the third rotatable wave plate and the second fixed wave-plate is arranged behind the third rotatable wave-plate.

**8.** System (1) according to one of the claims 1 to 7, **characterized in that** the polarization compensation means (6) is arranged in a free-space section of the quantum channel.

**9.** Method for quantum communication, quantum information and quantum cryptography, comprising

a source (2) generating polarized photons in two polarization states of at least two non-orthogonal polarization bases, and a first receiver with a detection means (3), whereby the detection means (3) enables the polarization measurement of the photons in the two polarization states of the at least two non-orthogonal polarization bases, and a first quantum channel (4), for guidance of the polarized photons from the source (2) to the first receiver,
or
a source (2) generating polarization-entangled photon pairs and a first receiver and a second receiver with a detection means (3) each, whereby each detection means (3) enables the polarization measurement of the photons in the at least two non-orthogonal polarization bases, and a first quantum channel (4), for guidance of the first photon of each polarization-entangled photon pair from the source (2) to the first receiver and a second quantum channel (5) for guidance of the second photon of each polarization-entangled photon pair from the source (2) to the second receiver, and
one polarization compensation means (6) comprising five successive wave-plates,
whereby three of the wave-plates are rotatable, and whereby the polarization compensation means (6) is arranged in the first quantum channel (4) or the second quantum channel (5) for compensating for the polarization transformation in the first or the second quantum channel, wherein for the polarization compensation the following steps are performed, preferably in this order

i) adjustment of the first rotatable wave-plate, in order to minimize or maximize a first parameter,
ii) adjustment of the second rotatable wave-plate, in order to maximize or minimize a second parameter,
iii) adjustment of the third rotatable wave-plate, in order to maximize or minimize a third parameter.

**10.** Method according to claim 9, **characterized in that**

for the polarization compensation only in the first quantum channel (4) polarized photons are used, and/or
for the polarization compensation in the first and the second quantum channel (5) polarization-entangled photon pairs are used.

**11.** Method according to claim 9 or 10, **characterized in that** the adjustments in the steps i) and ii) are performed in order to obtain a polarization compensation in the first non-orthogonal base and the adjustment in step iii) is performed in order to obtain an independent polarization compensation in the second non-orthogonal base.

**12.** Method according to one of the claims 9 to 11, **characterized in that**

by the use of polarized photons, in step i) and ii) the source (2) generates polarized photons in a state in the first non-orthogonal base, and in step iii) the source (2) generates polarized photons in a state in the second non-orthogonal base, and/or
by the use of polarization-entangled photon pairs, in step i), ii) and iii) the source (2) generates polarization-entangled photon pairs.

**13.** Method according to one of the claims 9 to 12, **characterized in that**

the first, second and third parameters are Stokes-parameter, or variations out of the Stokes-parameter, and/or
the first, second and third parameters are coincidences of the polarization-entangled photon pairs, and/or the quantum bit error rate, and/or the visibility of the polarization-entangled photon pairs, or variation of this parameter.

**14.** Method according to one of the claims 9 to 11, **characterized in that** the steps i) and ii) are performed until the visibility in the first non-orthogonal base is $vis_1 \geq 95\%$, preferably $vis_1 \geq 98\%$, more preferably $vis_1 \geq 99\%$.

**15.** Method according to one of the claims 9 to 14,

**characterized in that**
the adjustment in step i), ii) and iii) is performed by a rotation of the wave-plate in an arbitrary direction and a comparison of the parameter with the value before the rotation, preferably the rotation of the wave-plates is performed in steps smaller than 10° rotation of the wave plate, preferably smaller than 5°, more preferably smaller than 2°.

## Patentansprüche

1. System (1) für Quantenkommunikation, Quanteninformation und Quantenkryptographie,

   umfassend eine Quelle (2), die konfiguriert ist, polarisierte Photonen in zwei Polarisationszuständen von mindestens zwei nicht orthogonalen Polarisationsbasen zu erzeugen, und
   einen ersten Empfänger mit einem Detektionsmittel (3), wobei das Detektionsmittel (3) die Polarisationsmessung der Photonen in den zwei Polarisationszuständen der mindestens zwei nicht orthogonalen Polarisationsbasen ermöglicht, und
   einen ersten Quantenkanal (4), zum Leiten der polarisierten Photonen von der Quelle (2) zum ersten Empfänger, und
   ein Polarisationskompensationsmittel (6), das in dem ersten Quantenkanal (4) angeordnet ist, um die Polarisationstransformation in dem ersten Quantenkanal zu kompensieren,
   wobei das Polarisationskompensationsmittel (6) fünf aufeinanderfolgende Wellenplatten umfasst, von denen drei Wellenplatten drehbar sind.

2. System (1) für Quantenkommunikation, Quanteninformation und Quantenkryptographie,

   umfassend eine Quelle (2), die konfiguriert ist, polarisationsverschränkte Photonenpaare mit einem ersten und einem zweiten Photon für jedes Paar zu erzeugen, und
   einen ersten Empfänger und einen zweiten Empfänger mit jeweils einem Detektionsmittel (3), wobei jedes Detektionsmittel (3) die Polarisationsmessung der Photonen in mindestens zwei nicht orthogonalen Polarisationsbasen ermöglicht, und
   einen ersten Quantenkanal (4) zum Leiten des ersten Photons jedes polarisationsverschränkten Photonenpaars von der Quelle (2) zum ersten Empfänger und einen zweiten Quantenkanal (5) zum Leiten des zweiten Photons jedes polarisationsverschränkten Photonenpaars von der Quelle (2) zum zweiten Empfänger, und
   ein Polarisationskompensationsmittel (6), das in dem ersten Quantenkanal (4) oder in dem zweiten Quantenkanal (5) angeordnet ist, um die Polarisationstransformation in dem ersten oder dem zweiten Quantenkanal zu kompensieren,
   wobei das Polarisationskompensationsmittel (6) fünf aufeinanderfolgende Wellenplatten umfasst, von denen drei Wellenplatten drehbar sind.

3. System (1) nach Anspruch 1 oder 2,
   **dadurch gekennzeichnet,**
   **dass** drei Wellenplatten drehbar und zwei Wellenplatten fest sind.

4. System (1) nach einem der Ansprüche 1 bis 3,
   **dadurch gekennzeichnet,**
   **dass** die fünf Wellenplatten des Polarisationskompensationsmittels (6) λ/2-Plättchen und/oder λ/4-Plättchen sind.

5. System (1) nach einem der Ansprüche 1 bis 4,
   **dadurch gekennzeichnet,**
   **dass** die beiden festen Wellenplatten λ/4-Plättchen sind, vorzugsweise dass die beiden festen Wellenplatten bei 0° und 90°, oder 45° und 135°, oder in einer Variation von $n$ * 90° davon, mit $n$ = 1, 2, 3, ..., angeordnet sind.

6. System (1) nach einem der Ansprüche 1 bis 5,
   **dadurch gekennzeichnet,**
   **dass** die erste drehbare Wellenplatte ein λ/4-Plättchen oder ein λ/2-Plättchen ist, die zweite drehbare Wellenplatte ein λ/2-Plättchen ist, und die dritte drehbare Wellenplatte ein λ/2-Plättchen ist.

7. System (1) nach einem der Ansprüche 1 bis 6,
   **dadurch gekennzeichnet,**

   **dass** die erste feste Wellenplatte zwischen der ersten drehbaren und der zweiten drehbaren Wellenplatte angeordnet ist und die zweite feste Wellenplatte zwischen der zweiten drehbaren und der dritten drehbaren Wellenplatte angeordnet ist, oder
   die erste feste Wellenplatte zwischen der zweiten drehbaren und der dritten drehbaren Wellenplatte angeordnet ist und die zweite feste Wellenplatte hinter der dritten drehbaren Wellenplatte angeordnet ist.

8. System (1) nach einem der Ansprüche 1 bis 7,
   **dadurch gekennzeichnet,**
   **dass** das Polarisationskompensationsmittel (6) in einem Freiraumabschnitt des Quantenkanals angeordnet ist.

9. Verfahren zur Quantenkommunikation, Quanteninformation und Quantenkryptographie, umfassend

eine Quelle (2), die polarisierte Photonen in zwei Polarisationszuständen von mindestens zwei nicht-orthogonalen Polarisationsbasen erzeugt, und einen ersten Empfänger mit einem Detektionsmittel (3), wobei das Detektionsmittel (3) die Polarisationsmessung der Photonen in den zwei Polarisationszuständen der mindestens zwei nicht-orthogonalen Polarisationsbasen ermöglicht, und einen ersten Quantenkanal (4), zum Leiten der polarisierten Photonen von der Quelle (2) zum ersten Empfänger,
oder
eine Quelle (2), die polarisationsverschränkte Photonenpaare erzeugt, und einen ersten Empfänger und einen zweiten Empfänger mit je einem Detektionsmittel (3), wobei jedes Detektionsmittel (3) die Polarisationsmessung der Photonen in den mindestens zwei nicht orthogonalen Polarisationsbasen ermöglicht, und einen ersten Quantenkanal (4), zum Leiten des ersten Photons jedes polarisationsverschränkten Photonenpaars von der Quelle (2) zum ersten Empfänger und einen zweiten Quantenkanal (5) zum Leiten des zweiten Photons jedes polarisationsverschränkten Photonenpaars von der Quelle (2) zum zweiten Empfänger, und
ein Polarisationskompensationsmittel (6) umfassend fünf aufeinanderfolgende Wellenplatten, wobei drei der Wellenplatten drehbar sind, und wobei das Polarisationskompensationsmittel (6) in dem ersten Quantenkanal (4) oder dem zweiten Quantenkanal (5) angeordnet ist, um die Polarisationstransformation in dem ersten oder dem zweiten Quantenkanal zu kompensieren,
wobei für die Polarisationskompensation die folgenden Schritte durchgeführt werden, vorzugsweise in dieser Reihenfolge

i) Einstellen der ersten drehbaren Wellenplatte, um einen ersten Parameter zu minimieren oder zu maximieren,
ii) Einstellen der zweiten drehbaren Wellenplatte, um einen zweiten Parameter zu maximieren oder zu minimieren,
iii) Einstellen der dritten drehbaren Wellenplatte, um einen dritten Parameter zu maximieren oder zu minimieren.

**10.** Verfahren nach Anspruch 9,
**dadurch gekennzeichnet,**

**dass** für die Polarisationskompensation nur im ersten Quantenkanal (4) polarisierte Photonen verwendet werden, und/oder
**dass** für die Polarisationskompensation im ersten und zweiten Quantenkanal (5) polarisationsverschränkte Photonenpaare verwendet werden.

**11.** Verfahren nach Anspruch 9 oder 10,
**dadurch gekennzeichnet,**
**dass** die Einstellungen in den Schritten i) und ii) durchgeführt werden, um eine Polarisationskompensation in der ersten nicht-orthogonalen Basis zu erhalten, und die Einstellung in Schritt iii) durchgeführt wird, um eine unabhängige Polarisationskompensation in der zweiten nicht-orthogonalen Basis zu erhalten.

**12.** Verfahren nach einem der Ansprüche 9 bis 11,
**dadurch gekennzeichnet,**

**dass** bei der Verwendung von polarisierten Photonen die Quelle (2) in den Schritten i) und ii) polarisierte Photonen in einem Zustand in der ersten nicht orthogonalen Basis erzeugt, und die Quelle (2) in Schritt iii) polarisierte Photonen in einem Zustand in der zweiten nicht orthogonalen Basis erzeugt, und/oder
**dass** bei der Verwendung von polarisationsverschränkten Photonenpaaren die Quelle (2) in den Schritten i), ii) und iii) polarisationsverschränkte Photonenpaare erzeugt.

**13.** Verfahren nach einem der Ansprüche 9 bis 12,
**dadurch gekennzeichnet,**

**dass** der erste, zweite und dritte Parameter Stokes-Parameter oder Variationen aus dem Stokes-Parameter sind, und/oder
**dass** der erste, zweite und dritte Parameter Koinzidenzen der polarisationsverschränkten Photonenpaare und/oder die Quantenbitfehlerrate und/oder die Sichtbarkeit der polarisationsverschränkten Photonenpaare oder Variationen dieser Parameter sind.

**14.** Verfahren nach einem der Ansprüche 9 bis 11,
**dadurch gekennzeichnet,**
**dass** die Schritte i) und ii) durchgeführt werden, bis die Sichtbarkeit in der ersten nicht-orthogonalen Basis $vis_1 \geq 95\%$, vorzugsweise $vis_1 \geq 98\%$, besonders bevorzugt $vis_1 \geq 99\%$ ist.

**15.** Verfahren nach einem der Ansprüche 9 bis 14,
**dadurch gekennzeichnet,**
**dass** die Einstellung in Schritt i), ii) und iii) durch eine Drehung der Wellenplatte in eine beliebige Richtung und einen Vergleich des Parameters mit dem Wert vor der Drehung erfolgt, wobei die Drehung der Wellenplatten vorzugsweise in Schritten von weniger als 10° Drehung der Wellenplatte, vorzugsweise weniger als 5°, besonders bevorzugt weniger als 2° erfolgt.

## Revendications

1. Système (1) pour la communication quantique, l'information quantique et la cryptographie quantique,

   comprenant une source (2) configurée pour générer des photons polarisés dans deux états de polarisation d'au moins deux bases de polarisation non orthogonales, et
   un premier récepteur avec un moyen de détection (3), le moyen de détection (3) permettant la mesure de la polarisation des photons dans les deux états de polarisation des au moins deux bases de polarisation non orthogonales, et un premier canal quantique (4), pour le guidage des photons polarisés de la source (2) vers le premier récepteur, et
   un moyen de compensation de la polarisation (6) disposé dans le premier canal quantique (4) pour compenser la transformation de la polarisation dans le premier canal quantique,
   dans lequel le moyen de compensation de la polarisation (6) comprend cinq plaques d'onde successives, dont trois sont rotatives.

2. Système (1) pour la communication quantique, l'information quantique et la cryptographie quantique,

   comprenant une source (2) configurée pour générer des paires de photons intriqués par polarisation avec un premier et un deuxième photon pour chaque paire, et
   un premier récepteur et un deuxième récepteur avec chacun un moyen de détection (3), chaque moyen de détection (3) permettant la mesure de la polarisation des photons dans au moins deux bases de polarisation non orthogonales, et
   un premier canal quantique (4), pour guider le premier photon de chaque paire de photons intriqués par polarisation de la source (2) vers le premier récepteur, et un deuxième canal quantique (5), pour guider le deuxième photon de chaque paire de photons intriqués par polarisation de la source (2) vers le deuxième récepteur, et
   un moyen de compensation de polarisation (6) disposé dans le premier canal quantique (4) ou dans le deuxième canal quantique (5) pour compenser la transformation de polarisation dans le premier ou le deuxième canal quantique,
   dans lequel le moyen de compensation de la polarisation (6) comprend cinq plaques d'onde successives, dont trois sont rotatives.

3. Système (1) selon la revendication 1 ou 2,
   **caractérisée en ce que**
   trois plaques d'onde sont rotatives et deux plaques d'onde sont fixes.

4. Système (1) selon l'une des revendications 1 à 3,
   **caractérisée en ce que**
   les cinq plaques d'onde du moyen de compensation de la polarisation (6) sont des plaques demi-onde et/ou des plaques quart d'onde.

5. Système (1) selon l'une des revendications 1 à 4,
   **caractérisée en ce que**
   les deux plaques d'onde fixes sont des plaques quart d'onde, de préférence les deux plaques d'onde fixes sont disposées à 0° et 90°, ou 45° et 135°, ou dans une variation de $n$ * 90° de ceci, avec $n$ = 1, 2, 3, ....

6. Système (1) selon l'une des revendications 1 à 5,
   **caractérisée en ce que**
   la première plaque d'onde rotative est une plaque quart d'onde ou une plaque demi-onde, et la deuxième plaque d'onde rotative est une plaque demi-onde, et la troisième plaque d'onde rotative est une plaque demi-onde.

7. Système (1) selon l'une des revendications 1 à 6,
   **caractérisée en ce que**

   la première plaque d'onde fixe est disposée entre la première plaque d'onde rotative et la deuxième plaque d'onde rotative et la deuxième plaque d'onde fixe est disposée entre la deuxième plaque d'onde rotative et la troisième plaque d'onde rotative, ou
   la première plaque d'onde fixe est disposée entre la deuxième plaque d'onde rotative et la troisième plaque d'onde rotative, et la deuxième plaque d'onde fixe est disposée derrière la troisième plaque d'onde rotative.

8. Système (1) selon l'une des revendications 1 à 7,
   **caractérisée en ce que**
   le moyen de compensation de la polarisation (6) est disposé dans une section d'espace libre du canal quantique.

9. Procédé de communication quantique, d'information quantique et de cryptographie quantique, comprenant

   une source (2) générant des photons polarisés dans deux états de polarisation d'au moins deux bases de polarisation non orthogonales, et un premier récepteur avec un moyen de détection (3), le moyen de détection (3) permettant la mesure de la polarisation des photons dans les deux états de polarisation des au moins deux bases de polarisation non orthogonales, et un premier canal quantique (4), pour guider les photons polarisés de la source (2) vers le premier récepteur,
   ou

une source (2) générant des paires de photons intriqués par polarisation et un premier récepteur et un deuxième récepteur avec chacun un moyen de détection (3), chaque moyen de détection (3) permettant la mesure de la polarisation des photons dans les au moins deux bases de polarisation non orthogonales, et un premier canal quantique (4) pour guider le premier photon de chaque paire de photons intriqués par polarisation de la source (2) vers le premier récepteur, et un deuxième canal quantique (5) pour guider le deuxième photon de chaque paire de photons intriqués par polarisation de la source (2) vers le deuxième récepteur, et
un moyen de compensation de polarisation (6) comprenant cinq plaques ondulatoires successives, trois des plaques ondulatoires étant rotatives, et le moyen de compensation de polarisation (6) étant disposé dans le premier canal quantique (4) ou dans le deuxième canal quantique (5) afin de compenser la transformation de polarisation dans le premier ou le deuxième canal quantique,
dans lequel les étapes suivantes sont effectuées pour la compensation de la polarisation, de préférence dans cet ordre

i) ajustement de la première plaque d'onde rotative, afin de minimiser ou de maximiser un premier paramètre,
ii) ajustement de la deuxième plaque d'onde rotative, afin de maximiser ou de minimiser un deuxième paramètre,
iii) ajustement de la troisième plaque d'onde rotative, afin de maximiser ou de minimiser un troisième paramètre.

**10.** Procédé selon la revendication 9, **caractérisée en ce que**

pour la compensation de la polarisation, des photons polarisés sont utilisés seulement dans le premier canal quantique (4), et/ou
pour la compensation de la polarisation dans le premier et le deuxième canal quantique (5), des paires de photons intriqués par polarisation sont utilisés.

**11.** Procédé selon la revendication 9 ou 10, **caractérisée en ce que**
les ajustements aux étapes i) et ii) sont effectués afin d'obtenir une compensation de polarisation dans la première base non orthogonale et l'ajustement à l'étape iii) est effectué afin d'obtenir une compensation de polarisation indépendante dans la deuxième base non orthogonale.

**12.** Procédé selon l'une des revendications 9 ou 11, **caractérisée en ce que**

lors de l'utilisation de photons polarisés, aux étapes i) et ii), la source (2) génère des photons polarisés dans un état de la première base non orthogonale, et à l'étape iii), la source (2) génère des photons polarisés dans un état de la deuxième base non orthogonale, et/ou
lors de l'utilisation de paires de photons intriqués, aux étapes i), ii) et iii), la source (2) génère des paires de photons intriqués par polarisation.

**13.** Procédé selon l'une des revendications 9 ou 12, **caractérisée en ce que**

les premier, deuxième et troisième paramètres sont des paramètres de Stokes ou des variations des paramètres de Stokes, et/ou
les premier, deuxième et troisième paramètres sont les coïncidences des paires de photons intriqués par polarisation, et/ou le taux d'erreur sur les bits quantiques, et/ou la visibilité des paires de photons intriqués par polarisation, ou la variation de ce paramètre.

**14.** Procédé selon l'une des revendications 9 ou 11, **caractérisée en ce que**
les étapes i) et ii) sont effectuées jusqu'à ce que la visibilité dans la première base non orthogonale soit $vis_1 \geq 95\%$, de préférence $vis_1 \geq 98\%$, plus préférentiellement $vis_1 \geq 99\%$.

**15.** Procédé selon l'une des revendications 9 ou 14, **caractérisée en ce que**
l'ajustement aux étapes i), ii) et iii) est effectué par une rotation de la plaque d'onde dans une direction arbitraire et une comparaison du paramètre avec la valeur avant la rotation, de préférence la rotation des plaques d'onde est effectuée par étapes inférieures à 10° de rotation de la plaque d'onde, de préférence inférieures à 5°, plus préférentiellement inférieures à 2°.

1
2
3
4
6
1
2
3
3
4
5
6

Fig. 1

Fig. 2

3
4
6
10
11
12
13
14
20
21
21
22
23
23
23
23

Fig. 3

$S_1$
$S_3$
$S_2$

*Fig. 4*

$S_1$
$S_3$
$S_2$

*Fig. 5*

14
13
12
11
10
14
13
12
11
10

Fig. 7

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010208334 A1
- US 2015055961 A1
- EP 3771117 A1